# EUROPEAN PATENT APPLICATION

(11) **EP 4 765 278 A1**
(43) Date of publication of application: **24.06.2026**
(21) Application number: 25864570.4
(22) Date of filing: 18.06.2025
(51) Int. Cl.: H01M 10/04, B65H 35/00, B65H 43/04, B65H 3/08, H01M 10/48

(54) **INSULATION TAPE ATTACHING DEVICE**

(30) Priority: 27.09.2024 KR 20240131460
(71) Applicant: LG ENERGY SOLUTION, LTD., Seoul 07335 (KR)
(72) Inventor: CHAE, Seung Hun, (JP); JEON, Young Ho, (JP); BAN, Ji Seob, (JP); KIM, Doheon, (JP); KIM, Dongwoo, (JP)
(74) Representative: Goddar, Heinz J.
(86) International application number: PCT/KR2025/008405
(87) International publication number: WO 2026/071391

(57) **Abstract**

According to an embodiment of the present disclosure, an insulating tape attachment device includes a supply disk, around which an insulating tape is wound such that an adhesive surface faces outward, supplying the insulating tape, a cutting disk rotating, while facing the supply disk, and cutting the insulating tape wound around and supplied from the supply disk at a preset interval, and a main disk carrying the electrode assembly and bringing the cut insulating tape supplied by the supply disk into contact with the electrode assembly to attach the insulating tape to the electrode assembly.

## Description

### [TECHNICAL FIELD]

The present disclosure relates to an insulating tape attachment device used in the manufacture of a battery.

### [BACKGROUND ART]

Secondary batteries, which have high applicability according to product groups and electrical characteristics, such as high energy density, have been universally applied not only to portable devices but also to electric vehicles (EVs) or hybrid electric vehicles (HEVs) driven by electric power sources.

These secondary batteries have the primary advantage of being able to drastically reduce the use of fossil fuels and also have the advantage of not generating any byproducts from the use of energy, and have thus come to prominence as a new energy source for improving environmental friendliness and energy efficiency.

The types of secondary batteries currently widely used include lithium ion batteries, lithium polymer batteries, nickel cadmium batteries, nickel hydrogen batteries, nickel zinc batteries, etc. An operating voltage of these unit secondary battery cells, i.e., unit battery cells, is approximately 2.5 V to 4.6 V. Therefore, when a higher output voltage is required, a plurality of battery cells may be connected in series to configure a battery pack. In addition, a battery pack may also be configured by connecting a plurality of battery cells in parallel depending on the charge/discharge capacity required for the battery pack. Therefore, the number of battery cells included in the battery pack may be set variably depending a required output voltage or charge/discharge capacity.

One of the major research tasks in such secondary batteries is to improve safety. For example, a secondary battery may be exploded due to high temperature and high pressure inside the battery, which may be caused by abnormal operating conditions of the battery, such as an internal short circuit, an overcharge state exceeding an allowed current and voltage, exposure to high temperature, and deformation due to dropping or external impact.

As one of these safety issues, in the case of an electrode assembly, there is a high possibility that a short circuit between electrodes may be induced due to movement of the electrodes based on a separator when the battery is dropped or an external impact is applied to the battery, and accordingly, a fixing adhesive tape may be added to an outer surface of the electrode assembly to fix the electrode assembly.

Meanwhile, a manufacturing process of a secondary battery may include a process of forming a jelly roll including a negative electrode plate, a positive electrode plate, and a separator and a process of inserting the jelly roll in a case, such as a rectangular pouch, can, etc. and sealing the same.

Here, before smoothly inserting the jelly roll into the rectangular case, a process of compressing the jelly roll into a rectangular shape and attaching a plurality of tapes to the edge of the jelly roll has to be included in order to firmly maintain the compressed state of the jelly roll.

However, most of the tape attachment devices for secondary batteries are processed by laying down the secondary battery, so there is a problem in that a lot of space may be required for configuring the equipment and the production efficiency may deteriorate.

### [DETAILED DESCRIPTION OF INVENTION]

### [TECHNICAL PROBLEMS]

The present disclosure is to provide an insulating tape attachment device for manufacturing a secondary battery, which minimizes an installation space for equipment for processing a secondary battery, is configured as a rotary type, and has improved ease of operation and a production rate per minute.

However, the technical problems that the present disclosure is intended to solve are not limited to the problems described above, and other problems that are not mentioned may be clearly understood by those skilled in the art from the description of the disclosure given below.

### [TECHNICAL SOLUTION]

According to an embodiment of the present disclosure, an insulating tape attachment device for attaching an insulating tape to a side surface of a jelly roll-type electrode assembly to which a positive electrode current collecting plate is welded includes a supply disk, around which an insulating tape is wound such that an adhesive surface faces outward, supplying the insulating tape, a cutting disk rotating, while facing the supply disk, and cutting the insulating tape wound around and supplied from the supply disk at a preset interval, and a main disk carrying the electrode assembly and bringing the cut insulating tape supplied by the supply disk into contact with the electrode assembly to attach the insulating tape to the electrode assembly.

In addition, the main disk may include a disk body, a plurality of holders radially arranged along an edge of the disk body to support the electrode assembly so as to be rotatable, and one or more guide rollers provided between the plurality of holders to guide the insulating tape released from the supply disk to the electrode assembly so that the insulating tape received from the supply disk is attached, while the electrode assembly supported by the plurality of holders rotates.

In an embodiment of the present disclosure, the cutting disk may be replaced with a laser irradiation unit.

Here, the laser irradiation unit may be configured to irradiate a target with one laser among a CO₂ laser, a UV laser, and an IR PICO laser.

Here, the preset interval of the insulating tape cut by the cutting disk may correspond to a circumference of the electrode assembly.

The insulating tape attachment device may further include a tape supply unit supplying the insulating tape to the supply disk and an electrode assembly supply unit delivering the electrode assembly to the main disk.

The supply disk may be configured to generate negative pressure inside to absorb the insulating tape supplied by the tape supply unit.

When the cut insulating tape supplied by the supply disk comes into contact with the electrode assembly carried by the main disk, the negative pressure for absorbing the insulating tape from the supply disk may be configured to be released.

The insulating tape attachment device may further include a forming unit receiving the electrode assembly to which the insulating tape may be attached from the main disk and forming the insulating tape and an inspection unit inspecting a state of the electrode assembly to which the insulating tape formed in the forming unit may be attached.

In addition, the insulating tape attachment device may further include a transport disk positioned between the main disk and the forming unit and between the forming unit and the inspection unit to transport the electrode assembly.

In addition, the insulating tape attachment device may further include a defective product removal unit removing the electrode assembly to which an insulating tape determined to be defective by the inspection unit may be attached.

Here, the supply disk and the cutting disk may be configured to rotate continuously.

Meanwhile, an insulating tape cutting speed may be 2,000 to 3,000 mm/s.

In addition, the insulating tape attachment device may be configured to attach 200 or more insulating tapes per minute.

### [EFFECT OF INVENTION]

According to the present disclosure, an installation space for equipment for processing secondary batteries may be minimized, and the rotary type configuration may improve the ease of operation and the production volume per minute.

However, the effects that may be obtained through the present disclosure are not limited to the effects described above, and other technical effects that are not mentioned may be clearly understood by those skilled in the art from the description of the disclosure given below.

### [BRIEF DESCRIPTION OF THE DRAWING]

The following drawings attached to this specification illustrate preferred embodiments of the present disclosure and serve to further understand the technical idea of the present disclosure together with the detailed description of the disclosure given below, so the present disclosure should not be interpreted as being limited to matters described in such drawings.
FIG. 1 is a diagram illustrating an insulating tape attachment device according to an embodiment of the present disclosure.
FIGS. 2 and 3 are diagrams illustrating a process in which a main disk of FIG. 1 receives an insulating tape from a supply disk.
FIG. 4 is a diagram illustrating a state in which an insulating tape is cut by a cutting disk of FIG. 1.
FIG. 5 is a diagram illustrating another embodiment of an insulating tape attachment device according to the present disclosure.

### [BEST MODE FOR CARRYING OUT THE INVENTION]

The advantages and features of the present disclosure and the methods for achieving them will become apparent by referring to the embodiments described in detail below together with the accompanying drawings. However, the present disclosure is not limited to the embodiments disclosed below but may be implemented in various different forms, and these embodiments are provided only to make the disclosure of the present disclosure complete and to fully inform those skilled in the art of the scope of the invention, and the present disclosure is defined only by the scope of the claims. Accordingly, in some embodiments, well-known process steps, well-known device structures, and well-known techniques are not specifically described in order to avoid ambiguity in the interpretation of the present disclosure. Like reference numerals refer to like elements throughout the specification.

In the drawings, the thickness of layers, films, panels, regions, etc., are exaggerated for clarity. The various figures are thus not to scale. Like reference numerals designate like elements throughout the specification. It will be understood that when an element, such as a layer, film, region, or substrate, is referred to as being "on" another element, it may be directly on the other element or intervening elements may also be present. In contrast, when an element is referred to as being "directly on" another element, there are no intervening elements present. In addition, it will be understood that when an element, such as a layer, film, region, or substrate, is referred to as being "below" another element, it may be directly below the other element or intervening elements may also be present. In contrast, when an element is referred to as being "directly under" another element, there are no intervening elements present.

Throughout the specification, unless otherwise specifically stated, each element may be singular or plural.

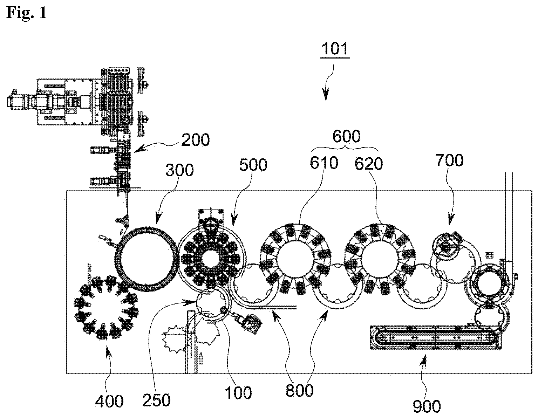

FIG. 1 is a diagram illustrating an insulating tape attachment device 101 according to an embodiment of the present disclosure.

The insulating tape attachment device 101 according to an embodiment of the present disclosure is a device for attaching an insulating tape T to a side surface of an electrode assembly 100 to which a positive electrode current collecting plate is welded. Here, the electrode assembly 100 may be, for example, a jelly roll-type electrode assembly. That is, the insulating tape attachment device 101 winds an insulating tape T around a positive terminal of the electrode assembly to insulate the positive electrode current collecting plate of the electrode assembly 100 and a battery case.

As illustrated in FIG. 1, the insulating tape attachment device 101 according to an embodiment of the present disclosure includes a supply disk 300, a cutting disk 400, and a main disk 500.

In addition, the insulating tape attachment device 101 according to an embodiment of the present disclosure may further include a tape supply unit 200, an electrode assembly supply unit 250, a forming unit 600, an inspection unit 700, a defective product removal unit 900, and a transport disk 800.

The supply disk 300 winds the insulating tape T such that an adhesive surface faces outward and supplies the same toward the main disk 500 (to be described below). In addition, in an embodiment of the present disclosure, the insulating tape T is cut by the cutting disk 400 (to be described below) before being supplied toward the main disk 500, while being wound around the supply disk 300.

In addition, the supply disk 300 may generate negative pressure inside to absorb the insulating tape T supplied by the tape supply unit 200 (to be described below). Accordingly, when the supply disk 300 rotates, the insulating tape T wound around the supply disk 300 may not escape and may be stably supported by the main disk 500 described below and attached to the rotating electrode assembly 100.

For example, the negative pressure may be formed by creating a vacuum or a pressure lower than external pressure in a region in which the supply disk 300 is in contact with the insulating tape T through a device, such as an air pump.

Meanwhile, when the cut insulating tape T supplied by the supply disk 300 comes into contact with the electrode assembly 100 carried by the main disk 500, the negative pressure for absorbing the insulating tape T from the supply disk 300 may be released. Accordingly, even if the insulating tape T comes into contact with the electrode assembly 100, a phenomenon in which the insulating tape T is not stuck to the electrode assembly 100 but continues to stick to the supply disk 300 may be prevented.

The tape supply unit 200 may supply the insulating tape T to the supply disk 300. That is, the insulating tape T supplied by the tape supply unit 200 may be absorbed by the supply disk 300 by the negative pressure generated by the supply disk 300.

The cutting disk 400 rotates in the opposite direction, while facing the supply disk 300, and cuts the insulating tape T supplied by being wound around the supply disk 300 at a preset interval. Here, the preset interval of the insulating tape T cut by the cutting disk 400 may correspond to the circumference of the electrode assembly 100 to which the insulating tape T is to be attached.

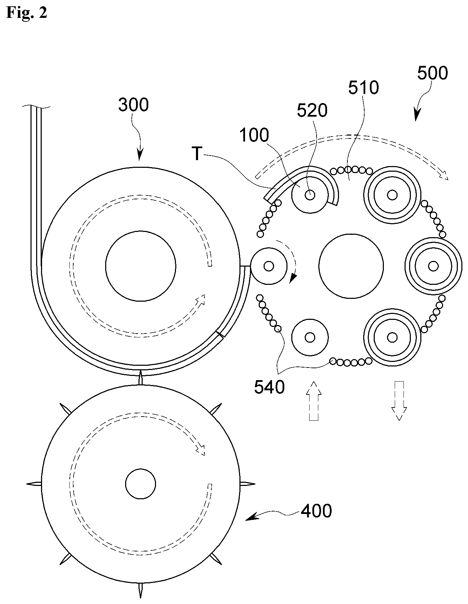

In an embodiment of the present disclosure, referring to FIG. 2, the cutting disk 400 may include a cutting knife for cutting. In this case, the insulating tape T may be cut by a knife cutting method.

The main disk 500 carries the electrode assembly 100 and brings the cut insulating tape T supplied by the supply disk 300 into contact with the electrode assembly 100 to attach the electrode assembly 100 to the electrode assembly 100.

Specifically, the main disk 500 may include a disk body 510, a plurality of holders 520, and a guide roller 540.

The disk body 510 may include a circular plate or a circular frame. The disk body 510 is rotatably installed, and a plurality of holders 520 and guide rollers 540 described below may be installed on the disk body 510.

The plurality of holders 520 may be radially arranged along the edge of the disk body 510 to support the electrode assembly 100 so as to be rotatable. The holders 520 may be configured to rotate at a mounting position.

One or more guide rollers 540 may be provided between the plurality of holders 520. The guide roller 540 is rotatable but does not have driving force by itself. That is, the guide roller 540 may naturally rotate according to the movement of the insulating tape T and help the stable movement of the insulating tape T to be supplied from the supply disk 300 and attached to the electrode assembly 100.

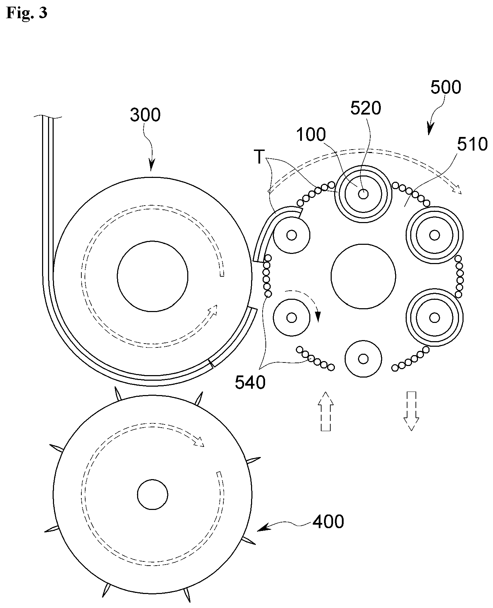

FIGS. 2 and 3 are diagrams illustrating a process of attaching the cut insulating tape T supplied by the supply disk 300 to the electrode assembly 100 carried by the main disk 500 in the insulating tape attachment device 101 according to an embodiment of the present disclosure.

As illustrated in FIG. 2, the guide roller 540 may guide the insulating tape T released from the supply disk 300 to the electrode assembly 100 so that the insulating tape T received from the supply disk 300 is attached to the electrode assembly 100 while the electrode assembly 100 supported by the plurality of holders 520 rotates.

Specifically, for example, when the center of the electrode assembly 100 carried by the main disk 500 is located on the imaginary line connecting a rotation center of the supply disk 300 and a rotation center of the main disk 500, the insulating tape T supplied by the supply disk 300 starts to be attached to the electrode assembly 100 carried by the main disk 500.

Next, as illustrated in FIG. 3, along with the rotation of the main disk 500, the holder 520 also rotates the electrode assembly 100 in the same direction as the rotation direction of the main disk 500. Also, as the electrode assembly 100 rotates, the insulating tape T that is not yet attached to the electrode assembly 100 and is located on the guide roller 540 is pulled.

In this manner, when the electrode assembly 100 rotates and the insulating tape T is wound, the insulating tape T guided by the guide roller 540 is pulled, the so that electrode assembly 100 to which the insulating tape T is to be attached next in turn may be prevented from interfering with the end of the insulating tape T that is not fully wound around the electrode assembly 100 to which the insulating tape T is being attached.

In addition, the insulating tape T may be stably attached to the electrode assembly 100 at a constant height due to the guide roller 540. In other words, the guide roller 540 enables the insulating tape T to be uniformly attached to the electrode assembly 100.

In addition, a plurality of guide rollers 540 may be provided between two holders 520, and here, the plurality of guide rollers 540 may also be installed along the edge of the main disk 500. In addition, the height of the insulating tape T attached to the electrode assembly 100 may be adjusted through the positions at which the plurality of guide rollers 540 are formed.

As described above, in the insulating tape attachment device 101 according to an embodiment of the present disclosure, the supply disk 300 and the cutting disk 400 may be rotated continuously, thereby improving a speed of an attachment process of the insulating tape T.

For example, the insulating tape attachment device 101 according to an embodiment of the present disclosure may be configured to attach about 200 or more insulating tapes T to the electrode assembly 100 per minute.

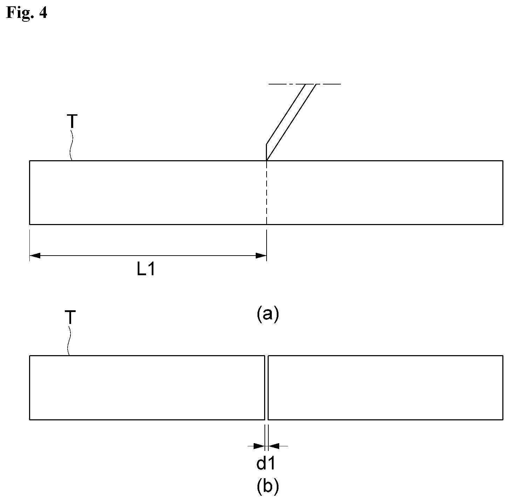

FIG. 4 illustrates the insulating tape T cut by the cutting disk 400 in the insulating tape attachment device 101 according to an embodiment of the present disclosure.

As shown in FIG. 4, the insulating tape T may be rapidly cut by the continuous rotation of the supply disk 300 and the cutting disk 400, and a gap d1 between the cut insulating tapes T may also be minimized. Therefore, the overall working speed of the insulating tape attachment device 101 may be further improved.

Meanwhile, as described above, a length L1 of the cut insulating tape T corresponds to the circumference of the electrode assembly 100 to which the insulating tape T is to be attached.

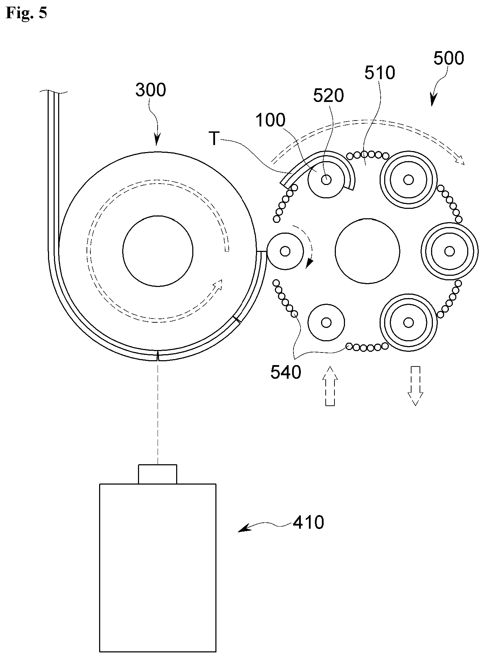

Meanwhile, as another embodiment of the present disclosure, as shown in FIG. 5, the cutting disk 400 may be replaced with a laser irradiation unit 410 for laser cutting. In this case, the insulating tape T may be cut by a laser cutting method. In general, a cutting speed of the laser cutting method is higher than that of a knife cutting method, and the laser irradiation unit 410 may irradiate a target with a CO₂ laser, a UV laser, an IR PICO laser, etc. However, the laser type is not limited thereto. In this case, the cutting speed may be secured to about 2,000 to 3,000 mm/s. In particular, it was confirmed that the IR PICO laser has an advantage in terms of cut surface quality and lifespan.

Referring back to FIG. 1, the forming unit 600 may receive the electrode assembly 100 to which the insulating tape T is attached from the main disk 500 and form the insulating tape T.

For example, the forming unit 600 may include a first forming unit 610 and a second forming unit 620. In this manner, the insulating tape attachment device 101 according to an embodiment of the present disclosure may perform the forming process twice to more stably form the insulating tape T.

The inspection unit 700 may inspect a state of the electrode assembly 100 to which the insulating tape T formed in the forming unit 600 is attached.

Also, the defective product removal unit 900 may remove the electrode assembly 100 to which the insulating tape T determined to be defective by the inspection unit 700 is attached.

Meanwhile, the electrode assembly 100 to which the insulating tape T that has passed the inspection is attached is supplied to a subsequent manufacturing process.

Meanwhile, the forming unit 600 may include a disk that rotates a plurality of electrode assemblies 100 to which the insulating tape T is attached, and the inspection unit 700 may also include a disk that rotates the plurality of electrode assemblies 100 to which the tape T is attached.

Also, the transport disk 800 is disposed between the main disk 500 and the forming unit 600 and between the forming unit 600 and the inspection unit 700, respectively, to continuously transport the electrode assembly 100.

Therefore, the insulating tape attachment device 101 according to an embodiment of the present disclosure may continuously perform the entire process of cutting, supplying, attaching, forming, inspecting, and removing defective products by cutting the insulating tape T without interruption.

Therefore, not only may the space required for installing the insulating tape attachment device 1101 be minimized, but also the ease of operation and the productivity may be improved.

By this configuration, the insulating tape attachment device 101 according to an embodiment of the present disclosure may minimize the installation space for the equipment for processing the secondary battery and may be configured as a rotary type to improve the ease of operation and the productivity per minute. That is, the insulating tape attachment device 101 according to an embodiment of the present disclosure may achieve both a reduction in the equipment size and an increase in equipment speed.

Meanwhile, although terms indicating directions, such as up and down, are used in this specification, it is obvious to those skilled in the art that these terms are only for the convenience of description and may vary depending on a location of a target object or a location of an observer.

Although the present disclosure has been described above with limited embodiments and drawings, the present disclosure is not limited thereto, and it is obvious that various modifications and variations may be made within the scope of the technical idea of the present disclosure and the equivalent scope of the claims to be described below by those skilled in the art.

### [DESCRIPTION OF REFERENCE NUMERALS]

100: electrode assembly
101: insulating tape attachment device
200: tape supply unit
300: supply disk
400: cutting disk
410: laser irradiation unit
500: main disk
510: disk body
520: holder
540: guide roller
600: forming unit
610: first forming unit
620: second forming unit
700: inspection unit
800: transport disk
900: defective product removal unit

### [INDUSTRIAL APPLICABILITY]

The present disclosure may be used to provide an insulating tape attachment device for manufacturing a secondary battery, which minimizes an installation space for equipment for processing a secondary battery and is configured as a rotary type, thereby improving ease of operation and a production rate per minute.

## Claims

1. An insulating tape attachment device for attaching an insulating tape to a side surface of an electrode assembly to which a positive electrode current collecting plate is welded, the insulating tape attachment device comprising:
a supply disk configured to supply an insulating tape wound around the supply disk such that an adhesive surface faces outward;
a cutting disk rotating, while facing the supply disk, and cutting the insulating tape wound around and supplied from the supply disk at a preset interval; and
a main disk carrying the electrode assembly and bringing the cut insulating tape supplied by the supply disk into contact with the electrode assembly to attach the insulating tape to the electrode assembly.

2. The insulating tape attachment device of claim 1, wherein
the main disk includes:
a disk body;
a plurality of holders radially arranged along an edge of the disk body to support the electrode assembly so as to be rotatable; and
one or more guide rollers provided between the plurality of holders to guide the insulating tape released from the supply disk to the electrode assembly so that the insulating tape received from the supply disk is attached, while the electrode assembly supported by the plurality of holders rotates.

3. The insulating tape attachment device of claim 1, wherein the cutting disk is replaced with a laser irradiation unit.

4. The insulating tape attachment device of claim 3, wherein the laser irradiation unit is configured to irradiate a target with one laser among a CO₂ laser, a UV laser, and an IR PICO laser.

5. The insulating tape attachment device of claim 1, wherein the preset interval of the insulating tape cut by the cutting disk corresponds to a circumference of the electrode assembly.

6. The insulating tape attachment device of claim 1, further comprising:
a tape supply unit supplying the insulating tape to the supply disk; and
an electrode assembly supply unit delivering the electrode assembly to the main disk.

7. The insulating tape attachment device of claim 6, wherein the supply disk generates negative pressure inside to absorb the insulating tape supplied by the tape supply unit.

8. The insulating tape attachment device of claim 7, wherein, when the cut insulating tape supplied by the supply disk comes into contact with the electrode assembly carried by the main disk, the negative pressure for absorbing the insulating tape from the supply disk is released.

9. The insulating tape attachment device of claim 1, further comprising:
a forming unit receiving the electrode assembly to which the insulating tape is attached from the main disk and forming the insulating tape; and
an inspection unit inspecting a state of the electrode assembly to which the insulating tape formed in the forming unit is attached.

10. The insulating tape attachment device of claim 9, further comprising a transport disk positioned between the main disk and the forming unit and between the forming unit and the inspection unit to transport the electrode assembly.

11. The insulating tape attachment device of claim 9, further comprising a defective product removal unit removing the electrode assembly to which an insulating tape determined to be defective by the inspection unit is attached.

12. The insulating tape attachment device of claim 1, wherein the supply disk and the cutting disk rotate continuously.

13. The insulating tape attachment device of claim 1, wherein an insulating tape cutting speed is 2,000 to 3,000 mm/s.

14. The insulating tape attachment device of claim 12, wherein the insulating tape attachment device is configured to attach 200 or more insulating tapes per minute.
